# EUROPEAN PATENT SPECIFICATION

(11) **EP 2 698 774 B1**
(45) Date of publication and mention of the grant of the patent: **14.06.2017**
(21) Application number: 12180353.0
(22) Date of filing: 14.08.2012
(51) Int. Cl.: G08B 15/00, G08B 25/14, G08B 25/00, G05B 19/00, H04L 12/28

(54) **A method and a device for controlling a security system**
Verfahren und Vorrichtung zur Steuerung eines Sicherheitssystems
Procédé et dispositif de contrôle d'un système de secours

(43) Date of publication of application: 19.02.2014
(73) Proprietor: Securitas Direct AB, 201 23 Malmö (SE)
(72) Inventor: Davidsson, Per Mattias, 25459 Helsingborg (SE)
(74) Representative: Persson, Albin

(56) References cited:
- GB-A- 2 202 982
- US-A- 5 461 372
- US-A1- 2009 177 327
- US-A1- 2010 023 865
- US-A1- 2010 277 300

## Description

### TECHNICAL FIELD

The invention relates to a method and a device for controlling a security system or an alarm system. The security system in general can be any type of intruder alarm and specifically can be a security system having a plurality of detectors sensitive to the presence or passage of persons and objects.

### PRIOR ART

Security and alarm systems used today normally comprise a control panel also referred to as a gateway that is connected to a central station, either by a telephone line or by a wireless telecommunications system such as GSM or other radio frequency systems. The connection also can be through the internet. The gateway can be provided with input means or be activated and controlled by control device such as a keypad which can be a wireless remote device.

The alarm system can be armed in different ways and into different alarm system states, such as "Disarmed", "Armed Home" and "Armed Away". If the system is set to "Disarmed" it will not alarm to perimeter or interior detectors. Still, fire detectors, other gas detectors, flooding events, power break down events and similar detectors normally will be armed also in the "Disarmed" state. If the alarm system is set to a first armed state referred to as "Armed Home" the alarm system will generate an alarm at the occurrence of a breach of a first group of selected detectors such as perimeter detectors and selected interior detectors, but not to a breach of the interior detectors in general. If the system is set to a second armed state referred to as "Armed Away" it will alarm to a breach of the perimeter or interior detectors and normally to all types of detectors.

The state of the system is determined by the needs of the occupants of the premises. If all of the occupants are leaving the premises then the alarm system should be set to "Armed Away". If the occupants will be staying within the premises for an extended period of time then the alarm system can be set to "Armed Home". This alarm setting can be appropriate for instance when the occupants are sleeping within the premises or are staying within a defined part thereof. For other scenarios the alarm system should be set to "Disarmed".

In the "Armed Home" state a selected group of detectors is armed. In various embodiments the selected group of detectors includes the perimeter detectors and interior detectors covering sections of the premises that are not used by the occupants. Each installation can be set up with different detectors included in the selected group.

The wireless remote device can be arranged in different ways. In WO200755907 there is described a wireless handheld device having a flat panel touch-pad input. The touch-pad input allows a user to rapidly select and control many security and house control functions, such as Arm, Disarm, Panic, garage door open, lamp on/off, and lamp dimming control, etc. The security device also comprises a display such as an LCD display and an RF transmitter. The RF transmitter is used for communicating with the alarm system.

The communication capabilities and service range of the wireless handheld device shown in WO200755907 are limited. To provide a long distance control of the security system the device can be fitted with a Bluetooth interface communicating with a cellular phone for transmitting messages to the security system.

From US20090232307 there is known a system comprising a mobile device with an application that will emulate a virtual security keyboard (of a gateway). The mobile device communicates with a data server and the gateway through GPRS or other internet system.

US20100023865 discloses a system user interface (SUI) that provides an iconic, at-a-glance representation of security system status. The SUI also includes an interactive Timeline interface, a widget-based Slideshow timeline interface, and a graphical interface for managing schedules, set points, and controls for lighting and thermostats and general energy usage.

US5461372 discloses a system and method for modifying security levels within a security system. External modifications are allowed only if the security of a point is increased. The security system prevents a lowering of the security level of the alarm system from a phone not located within the protected building.

An object of the invention is to overcome the limited communication capabilities of prior art remote control devices and to improve the service level and control functions of a security system.

### SUMMARY OF THE INVENTION

In accordance with the invention a method of controlling a security system in a building includes a plurality of steps performed in a conventional smartphone or similar mobile device. The security system can be a conventional security system that comprises at least one alarm detector and a gateway having communication means for communicating with a remote security server. The gateway is also operatively connected to light sensitive means for determining ambient light conditions. In various embodiments the geographical position of the gateway is used by the remote server to determine ambient light conditions based on tables for sunlight or similar data. In such cases information is transferred from the remote server to the gateway at appropriate time intervals, for instance as once a day.

An executable module or computer program such as an application ("app") is downloaded to and run in the mobile device and can be set by a user to a wait or sleep mode for any predetermined time period. This mode corresponds to a selected alarm state, such as Armed Home. When set into sleep mode the mobile device is configured to transmit an alarm setting instruction to the remote security server. The remote security server contacts the gateway of the alarm system and arms the alarm system into the selected state. All normal functions of the gateway and the alarm systems can be maintained.

When the predetermined time period has lapsed a disarming instruction is sent from the mobile device to the remote security server. At the same time a wake up signal can be generated. The remote security server sends a corresponding disarming instruction to the gateway of the alarm system setting the alarm system into a disarmed state. Should the ambient light conditions at this point indicate that further light is required the gateway will transmit control signals to at least one lamp or similar illumination means to switch it on. As a result the user of the system will be awakened by the wake up signal and experience preferred light conditions based on a previously determined set of rules.

In various embodiments the mobile device can be used also to individually switch on and of selected lamps. If the system is in Armed Away state a different set of control signals can be generated and sent through the remote security server and the gateway to said lamps. Also in the Armed Away state input from light sensitive means or from the remote server is used to determine when selected lamps are switched on and off respectfully. Random and other different delays can be used in the system so as to avoid a direct relationship between actual ambient light conditions and when the lamps are switched on and off.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic overview of an installation including one embodiment of a device in accordance with the invention,
- Fig. 2: shows an alternative installation of a security system in accordance with the invention, and
- Fig. 3: is a schematic overview showing wireless communication in an installation of a security system in accordance with the invention.

### DETAILED DESCRIPTION

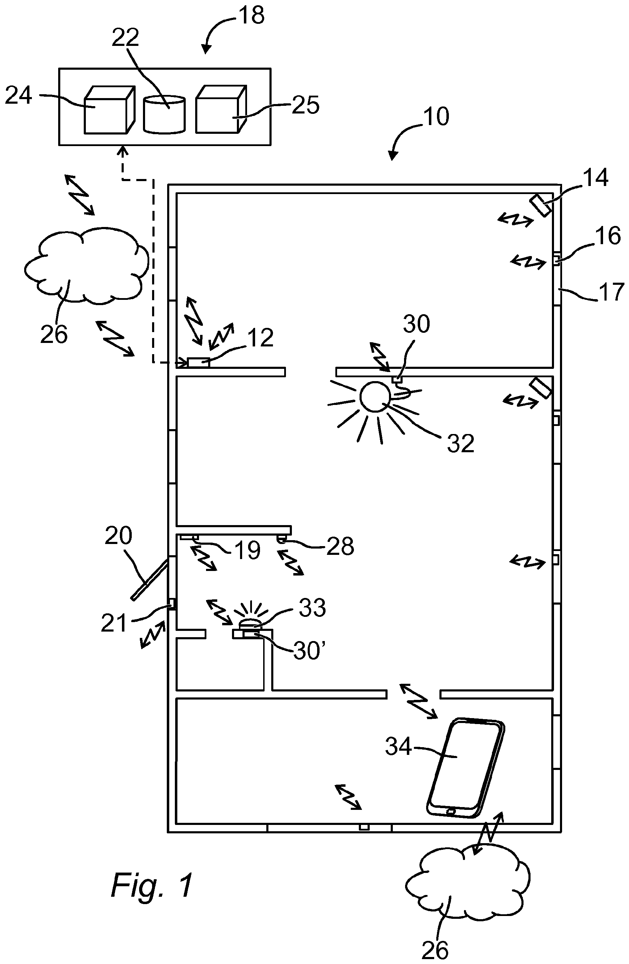

In the embodiment shown in Fig. 1 an alarm system is arranged in a building 10. The alarm system comprises a gateway 12 which is mounted on a wall in a well-protected area. In the shown embodiment the well-protected area is a room where a first infrared detector 14 covers a large section of the room including the gateway 12. There is provided also a first perimeter alarm detector 16 which is mounted at a window 17. In various embodiments at least a second infrared detector 23 and plurality of further perimeter alarm detectors are arranged in the premises.

The gateway communicates with a remote alarm receiving office centre 18 and keypad 19 arranged in the vicinity of an entrance door 20. Communication with the remote alarm receiving office centre 18 can be made through a plurality of media and systems. In various embodiments a telephone line or a wireless telecommunications system such as GSM or other radio frequency systems can be used. The connection also can be through the internet.

The entrance door 20 is provided with a second perimeter alarm detector 21. The remote alarm receiving office centre 18 comprises a database 22 with relevant information relating to the installed alarm system and a control and communications unit 24 having means for communicating via wire, such as the public switched telephone network (PSTN), the internet 26 and different radio communication network systems, such as GSM and GPRS.

In the embodiment shown the building or premises 10 is provided with a light sensitive means 28 capable of obtaining a signal indicative of the ambient light conditions. In various embodiments the light sensitive means is included in the gateway 12, a detector, such as an infrared detector 14, or in the keypad 19. In various embodiments data corresponding to ambient light conditions are transferred from the remote server. The signal from the light sensitive means 28 or from the remote server is communicated to the gateway 12 and can be used when the alarm system in a normal operational mode is disarmed. In connection with a disarming operation the alarm system automatically determines on the basis of the ambient light conditions whether one or a plurality of lamps should be switched on.

One or a plurality of lamps in the building is connected to a power interface unit such as a power plug 30 or similar device. The power interface unit is connected to the mains power line of the building and comprises wireless communication means for communicating with the alarm system. When receiving an instruction from the alarm system the power plug 30 will switch on or switch off the lamp.

In the shown embodiment a first lamp 32 is connected to the power plug 30. In various embodiments it can be switched on by the gateway 12 or the keypad 19 should the signal from the light sensitive means 28 indicate that the ambient light conditions require so. A second lamp 33 is connected to an embedded power plug or corresponding device 30'.

In accordance with the invention a mobile device 34 such as a smart phone or similar device downloads and runs a software or application ("app") associated with the alarm system. The application basically allows an operator of the alarm system to arm and disarm the alarm system in a similar manner as when using the keypad 19. A further set of control functions is also available to the operator.

The application has a wake up function similar to a normal electronic alarm clock. The operator selects a wake up time or another time period by entering data into the mobile device. After receiving these data the mobile device will transmit an alarm setting instruction to said remote alarm receiving office centre 18 that will forward an alarm setting instruction to the alarm system. Depending on whether the operator sets the alarm to an armed home state or an armed away state different actions can be taken.

The communication between the mobile device and the office centre 18 takes place via a wireless connection, such as GSM, GPRS or associated and similar communication standards. Assuming that the operator is present in the building the alarm system can be set into an armed home state. In various embodiments the mobile device communicates with the remote alarm receiving office centre 18 via the gateway 12 which normally is linked to the remote alarm receiving office centre 18.

If set to the armed home state the information from the light sensitive means 28 is used to determine if a predefined set of lamps is to be turned off. Preferably the gateway 12 will instruct the lamp or a plurality of lamps to be turned off randomly within a predefined time period, so as to create the illusion that a person turns the lamps off while moving inside the building.

When the wake up time is reached or the set time period has expired the mobile device generates a wake up signal so as to alert the operator. In connection with the wake up signal a corresponding disarming signal is sent to the remote alarm receiving office centre 18 and further on to the gateway of the alarm system. When receiving the signal from the remote alarm receiving office centre 18 the gateway disarms the alarm system. An acknowledge signal returned to the remote alarm receiving office centre 18 and further on to the mobile device.

The gateway 12 at this stage has received information about ambient light conditions from the light sensitive means 28 and determines on the basis of the present light conditions if any lamps or other similar illumination means are to be switched on. One or a plurality of lamps and other similar illumination means are provided with receiving means for receiving a control signal from the gateway. The control signal is used to switch on or to switch off the lamp. In various embodiments the lamp or illumination means is connected to the mains via a power plug or similar device.

The power plug comprises wireless means connected to associated wireless means of the gateway 12 and is set to switch on or of an electric device that is connected to the power plug. In various embodiments the power plug is embedded in a power outlet. Following instructions from the gateway 12 the power plug is switched on and off and a lamp connected to the power plug will be switched on and off accordingly.

A user can configure the alarm system to switch on and off lamps automatically depending on the arming status, ambient light conditions, wake up time pending and wake up time reached. Preferably, all settings are made through a web server 25 provided at the remote alarm receiving centre or arranged to be connected thereto.

The system allows the user to select which lamps or power plugs to be switched on and off, respectively, when different conditions are met. For instance, if the system is in the armed away state and the wake up time is reached specified lamps are turned on randomly during a period of time, such as during fifteen minutes.

The system also can be configured to switch one or a plurality of specified lamps when the second perimeter alarm detector 21 associated to the entrance door 20 detects that the entrance door has been opened. Such a feature will create a friendlier atmosphere to the user. Also in this case ambient light conditions as determined by the light sensitive means 28 can be taken into account.

A major advantage of controlling lamps and other electrical devices through the alarm system is that they can be switched on when an alarm situation occurs. Different lamps and different settings can be chosen for fire, SOS or burglar alarms. Settings can be made to facilitate evacuation in case of a fire. Flashing or high power lamps can be turned on if a burglar is detected to distract or to disturb the burglar.

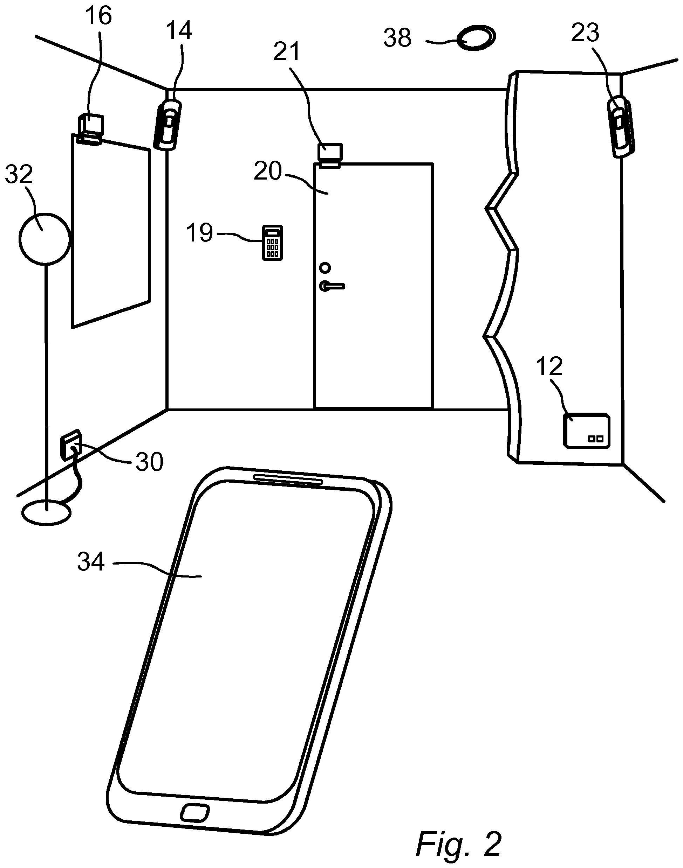

In the embodiment shown in Fig. 2 the alarm system basically comprises a similar set of components as shown in Fig. 1. A smoke detector 38 is arranged in the ceiling of a first room. Further smoke detectors can be provided in other rooms. The first perimeter alarm detector 16 is provided at a first window and the second perimeter alarm detector 21 is arranged at the entrance door 20. In the vicinity of the entrance door 20 the keypad 19 conveniently is mounted on a wall. The mobile device 34 and/or the keypad are used to arm and to disarm the alarm system.

The first infrared detector 14 covers an entrance room or entrance hall. A second infrared detector 23 covers the room where the gateway 12 is arranged. The first lamp 32 is connected to mains through a power plug 30 that is controlled by the gateway 12. In accordance with a configuration chosen by an operator or user the lamp 32 will be turned on and off in dependence of alarm settings, alarm conditions and ambient light conditions.

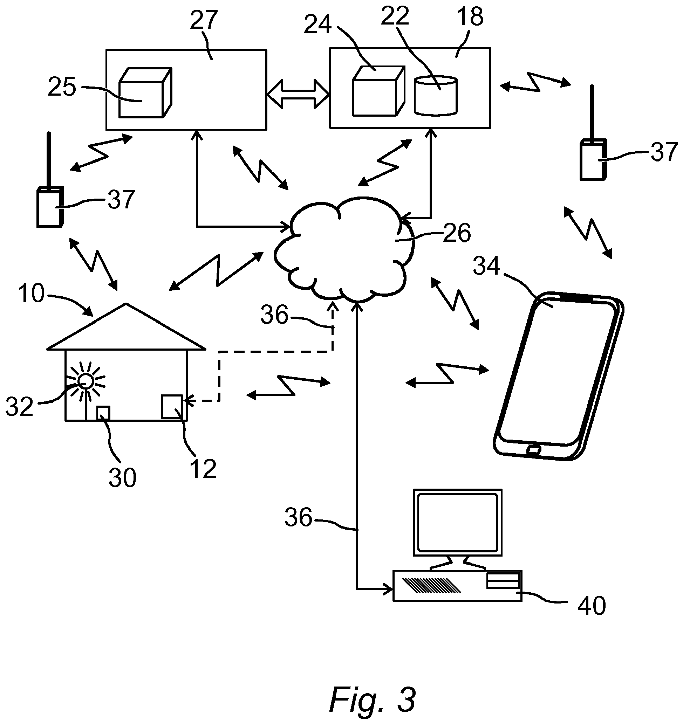

Fig. 3 illustrates external communication between an installation such as an alarm system in the building 10, the mobile device 34 and a remote alarm receiving centre 18. In the embodiment shown in Fig. 3 the web server 25 is arranged at a different location than the control and communications unit 24 and the database 22 of the remote alarm receiving centre 18. The web server arrangement shown in Fig. 3 can be used also in other embodiments.

There are different ways for the mobile device 34 to communicate with the web server 25. If the mobile device has access to the internet 26 communication normally is handled over the internet. It is possible also to open a communication link through the gateway 12 that optionally is provided with a wired connection 36 to the internet 26. Another option is communicate through a cellular telephone system, such as GSM, GPRS, 4G illustrated by a base station 37.

When the user of the alarm system configures it in general and lighting options specifically either the mobile device 34 or a conventional computer 40 can be used. In both cases a connection to an interface module 27 of the remote alarm receiving centre 18, comprising or consisting of the web server 25, has to be established. The interface module 27 allows the user also to control other aspects of the alarm system, such as rearranging and adding further detectors, adding or changing disarming codes and performing operations normally available when using a keypad 19 or similar device provided within the building 10. The interface module 27 is used also to access and to download the executable module to the mobile device.

The remote alarm receiving centre 18 can be provided with means for determining ambient light conditions at each installation. Such means can comprise tables of sunlight hours at different locations or similar means and data. Data are repeatedly transferred from the remote alarm receiving centre 18 to the gateway or gateways of each installation operatively connected thereto.

## Claims

1. A method of controlling a security system in a building wherein the security system comprises at least one wireless alarm detector (14; 16; 21; 23) and a gateway (12) having communication means for communicating with said at least one alarm detector (14; 16; 21; 23) and a remote alarm receiving centre (18), the method comprising the steps:
a) setting a mobile device (34) into a sleep mode during a predetermined time period,
b) transmitting an alarm setting instruction from the mobile device (34) to said remote alarm receiving centre (18) when entering said sleep mode,
c) transmitting a corresponding alarm setting instruction from said remote alarm receiving centre (18) to said gateway (12) for arming said security system into a first armed state,
d) producing in said mobile device(34) a wake up signal so as to alert a user when said predetermined time period has expired,
e) transmitting a disarming instruction from the mobile device (34) to said remote alarm receiving centre (18) when said predetermined time period has expired,
f) transmitting a corresponding disarming instruction from remote alarm receiving centre (18) to said gateway (12) for disarming said security system into a disarmed state,
g) determining ambient light conditions in said building and
h) generating and sending instructions to at least one power plug (30) to switch on lighting means (32; 33) on the basis of ambient light conditions in said disarmed state.

2. The method as claimed in claim 1, also comprising
randomly turning off said lighting means (32; 33) when said security system is armed into said first armed state.

## Patentansprüche

1. Verfahren zur Steuerung eines Sicherheitssystems in einem Gebäude, wobei das Sicherheitssystem mindestens einen drahtlosen Alarmmelder (14; 16; 21; 23) und ein Gateway (12) mit einer Kommunikationseinrichtung zum Kommunizieren mit dem mindestens einen Alarmmelder (14; 16; 21; 23) und ein entferntes Alarmempfangszentrum (18) aufweist, wobei das Verfahren folgende Schritte aufweist:
a) in einen Schlafmodus Versetzen eines Mobilgeräts (34) während einer vorbestimmten Zeitdauer,
b) Übertragen eines Alarmeinstellungsbefehls von dem Mobilgerät (34) zu dem entfernten Alarmempfangszentrum (18), wenn es in den Schlafmodus eintritt,
c) Übertragen eines entsprechenden Alarmeinstellungsbefehls von dem entfernten Alarmempfangszentrum (18) zu dem Gateway (12) zum Scharfschalten des Sicherheitssystems in einen ersten scharfgeschalteten Zustand,
d) Erzeugen eines Aufwecksignals in dem Mobilgerät (34), um einen Benutzer zu warnen, wenn die vorbestimmte Zeitdauer abgelaufen ist,
e) Übertragen eines Entschärfungsbefehls von dem Mobilgerät (34) an das entfernte Alarmempfangszentrum (18), wenn die vorbestimmte Zeitdauer abgelaufen ist,
f) Übertragen eines entsprechenden Entschärfungsbefehls von dem entfernten Alarmempfangszentrum (18) an das Gateway (12) zum Entschärfen des Sicherheitssystems in einen entschärften Zustand,
g) Bestimmen der Umgebungslichtbedingungen in dem Gebäude und
h) Erzeugen und Senden von Befehlen an mindestens einen Netzanschlussstecker (30), um Beleuchtungsmittel (32; 33) basierend auf den Umgebungslichtbedingungen in dem entschärften Zustand anzuschalten.

2. Verfahren nach Anspruch 1, weiterhin aufweisend
das zufällige Abschalten der Beleuchtungsmittel (32; 33), wenn das Sicherheitssystem in den ersten scharfgeschalteten Zustand scharfgeschaltet wird.

## Revendications

1. Procédé de contrôle d'un système de sécurité dans un bâtiment, où le système de sécurité comprend au moins un détecteur d'alarme sans fil (14 ; 16 ; 21 ; 23) et une passerelle (12) présentant un moyen de communication pour une communication avec ledit au moins un détecteur d'alarme (14 ; 16 ; 21 ; 23) et un centre de réception d'alarme à distance (18), le procédé comprenant les étapes :
a) configurer un dispositif mobile (34) en mode de veille pendant une période de temps prédéterminée,
b) transmettre une instruction de configuration d'alarme du dispositif mobile (34) audit centre de réception d'alarme à distance (18) lors de l'entrée dans ledit mode de veille,
c) transmettre une instruction de configuration d'alarme correspondante dudit centre de réception d'alarme à distance (18) à ladite passerelle (12) afin d'armer ledit système de sécurité dans un premier état armé,
d) produire dans ledit dispositif mobile (34) un signal de réveil de manière à avertir un utilisateur lorsque ladite période de temps a expiré,
e) transmettre une instruction de désarmement du dispositif mobile (34) audit centre de réception d'alarme à distance (18) lorsque ladite période de temps a expiré,
f) transmettre une instruction de désarmement correspondante du centre de réception d'alarme à distance (18) à ladite passerelle (12) afin de désarmer ledit système de sécurité dans un état désarmé,
g) déterminer des conditions d'éclairage ambiantes dans ledit bâtiment et
h) générer et envoyer des instructions à au moins une fiche secteur (30) pour allumer des moyens d'éclairage (32 ; 33) sur la base des conditions d'éclairage ambiantes dans ledit état désarmé.

2. Procédé selon la revendication 1, comprenant également
le fait d'éteindre de manière aléatoire lesdits moyens d'éclairage (32 ; 33) lorsque ledit système de sécurité est armé dans ledit premier état armé.
